# EUROPÄISCHE PATENTSCHRIFT

(11) **EP 2 870 992 B1**
(45) Veröffentlichungstag und Bekanntmachung des Hinweises auf die Patenterteilung: **25.12.2019**
(21) Anmeldenummer: 13192552.1
(22) Anmeldetag: 12.11.2013
(51) Int. Cl.: B01D 53/22, B01D 65/02

(54) **Verfahren zur Reinigung einer Gaspermeationsmembran**
Method for cleaning a gas permeation membrane
Procédé destiné au nettoyage d'une membrane perméable au gaz

(43) Veröffentlichungstag der Anmeldung: 13.05.2015
(73) Patentinhaber: Axiom Angewandte Prozeßtechnik Ges. m.b.H., 2443 Ebreichsdorf (AT)
(72) Erfinder: SZIVACZ, Johannes, 2484 Weigelsdorf (AT)
(74) Vertreter: Sonn & Partner Patentanwälte

(56) Entgegenhaltungen:
- EP-A2- 0 337 499
- WO-A1-99/07459
- WO-A1-2008/025077
- WO-A1-2011/107898
- US-A1- 2007 051 238

## Beschreibung

Die vorliegende Erfindung betrifft ein Verfahren zur Reinigung bzw. Regeneration von Gaspermeationsmembranen in Trenneinheiten. Solche Trenneinheiten können beispielsweise Gaspermeationsmembraneinheiten sein, in welchen Gasgemische in einen Retentatstrom und einen Permeatstrom getrennt werden. Je nach Einsatz kann dabei der Retentatstrom das Produkt und das Permeat das Offgas, oder umgekehrt, bilden.

Eine Gastrennmembran besteht im Wesentlichen aus einer Trennschicht und einer meist porösen Stützschicht, meist als Hohlfaser ausgeführt. Eine Vielzahl von solchen Hohlfasern zusammengefasst in einem Gehäuse ergeben ein Membranmodul.

Die Funktionsweise einer Gaspermeationsmembran basiert auf dem Lösungs-Diffusionsprinzip, das heißt es werden die unterschiedlichen Lösungs- und Diffusionseigenschaften der einzelnen Gase eines zu trennenden Gasgemisches in einem als Trennschicht ausgeführten Kunststoff (welcher, ein Polymer sein kann) genutzt, um einen Trenneffekt eines Gasgemisches zu erzielen. Die Komponenten des Gasgemisches gehen dabei je nach ihren Eigenschaften in der Trennschicht einer Membrane in Lösung, um dann entsprechend einer notwendigerweise vorhandenen Partialdruckdifferenz, welche als Triebkraft fungiert, auf jene Seite der Trennschicht zu diffundieren, bzw. permeieren, welche den niedrigeren Partialdruck der einzelnen Gaskomponente aufweist. Die Seite, von welcher aus die Membrane mit dem Gas oder Gasgemisch beaufschlagt wird, heißt Retentatseite, der Gasstrom entsprechend Retentat und die andere Seite dementsprechend Permeatseite und der Gasstrom Permeat.

Als Beispiel für eine mögliche Trennung seien hier Stickstoff N₂ und Sauerstoff O₂ genannt, welche eine relative Löslichkeit O₂/N₂ von 5,5 in einem speziell für die Stickstoff / Sauerstofftrennung genutzten Polymer haben. Das bedeutet, dass unter gleichen Bedingungen, wie Druck, Temperatur und Fläche, der Sauerstoff O₂ 5,5 mal mehr in der Trennschicht und dem damit verwendeten Trennmaterial (Polymer) in Lösung geht als der Stickstoff N₂. Bei der Trennung von Methan CH₄ und CO₂ liegt das Verhältnis CO₂/CH₄ heute bereits bei 50 oder mehr. Dieses Verhältnis der unterschiedlichen Löslichkeit zweier Gase in einem Kunststoff (Polymer) wird auch als Selektivität der beiden Gase untereinander bezeichnet. Der durch die Partialdruckdifferenz (Triebkraft) ausgelöste Fluss wird auch als transmembraner Fluss (mit der Einheit Nm³/m².sec.bar) einer Membrane bezeichnet und ist neben der Selektivität das zweite wesentliche Leistungsmerkmal einer Membrane.

Neben chemischen Substanzen, wie z.B. organischen Lösungsmitteln, welche die selektive Schicht einer Membrane definitiv zerstören und die Trenneigenschaften der Membrane damit unwirksam machen, können auch Verunreinigungen in Form von Partikel die Membrane mechanisch je nach Verschmutzungsgrad schnell oder auch langsam verblocken oder verstopfen und den transmembranen Fluss sukzessiv bis zum Stillstand reduzieren. Der Durchfluss durch die Membranfasern selbst oder der Weg des Gasgemisches durch die poröse Stützschicht zur selektiven Trennschicht wird eingeschränkt oder komplett verhindert, wodurch die Leistung der Membrane wesentlich oder ganz reduziert wird.

Im Falle der Beschädigung oder Zerstörung der Membrane durch chemische Lösungsmittel, oder der Beschädigung oder Zerstörung der Membrane durch mechanisch Verblockung oder Verstopfung, ist eine Reparatur oder Regeneration der Membrane praktisch unmöglich. In der Praxis wird die Beschädigung von Membranen durch Partikel mit Filtern, welche eine max. Partikelgröße von 0,01 µm durchlassen, verhindert.

Die WO 2011/107898 A1 offenbart Membranen zur Abtrennung von Sauerstoff aus der Luft, zur Reinigung (bzw. Desorption) wird Frischluft durch den Gaseinlass 12 oder 22 geleitet, wobei während der Desorption die Membran auf eine Temperatur im Bereich von 150-200 °C aufgeheizt werden kann.

Gemäß der US 2007/051238 A1 werden Absorber A und B gezeigt, welche Absorber mit teilchenförmigem Absorptionsmittel gefüllt sind und durch Führen eines Gasstroms gegen die Betriebsrichtung gereinigt werden können.

Die WO 2008/025077 A1 betrifft ein Verfahren zur Reinigung einer permeablen Membran, wobei das im System verbliebene Permeat durch ein Gas unter Druck gesetzt wird, wodurch das Permeat die Poren der Membran rückspült.

Die EP 0 337 499 A2 betrifft ein Verfahren zur Regenerierung von gebrauchten gasdurchlässigen Membranen, wobei die Membran einen gasselektiven Film umfasst und mit einem organischen flüssigen Medium in Berührung gebracht wird, in welchem der gasselektive Film unlösliche oder nur schlecht löslich ist.

Die WO 99/07459A1 schließlich betrifft eine Reinigungsmethode für poröse Membranen welche in Ölraffinerien Einsatz finden, wobei die Membranen zuerst mit einem Gas und dann mit einem essbaren Öl rückgespült und danach mit einem alkalischen Material behandelt werden.

Als die in der Praxis am häufigsten vorkommende Beeinträchtigung der Leistungsfähigkeit einer Gastrennmembran ist die Verblockung oder Verstopfung durch langkettige gasförmige Moleküle, meist Kohlenwasserstoffe, zu nennen, welche Kohlenwasserstoffe durch den zu trennenden Gasstrom in die Membrane eingetragen werden. Diese Verblockung durch Ablagerung der langkettigen Kohlenwasserstoffe kann bereits in der porösen Stützschicht beginnen, aber der wesentliche, negative Einfluss findet durch die Verblockung durch diese langkettigen Moleküle an und in der selektiven Trennschicht statt.

Als Beispiel wird im Folgenden ein solcher Ereignisverlauf aus der Praxis erwähnt.

Die Anlage besteht aus einem Stickstoffgenerator, welcher mit Gaspermeationsmembraneinheiten aus der Luft ein 95%iges N₂-Inertgasgemisch herstellt.

Der Arbeitsdruck der Anlage liegt bei 7 - 12 bar g, als Verdichter wurde im Generator ein ölgeschmierter Schraubenkompressor eingesetzt. Durch unsachgemäße Wartung der Anlage gelangte in der Vergangenheit zusammen mit der Druckluft permanent ein Öldampfgehalt in die Membranen, welcher höher war, als der vom Membranhersteller zugelassene Wert von 0,01 mg Öl absolut pro Nm³ Luft. Durch diesen Eintrag der langkettigen höheren Kohlenwasserstoffe (Öldampf) wurde über die Zeit die Stützschicht, aber vor allem die selektive Schicht, der Membrane zunehmend verblockt und somit die freie Fläche an bzw. der freie Raum in der Trennschicht für die Gaspermeation reduziert, mit der Konsequenz, dass die Leistung der Anlage (in Nm³/h Retentat) im Verhältnis mit der sich permanent durch Verblockung reduzierenden Membranfläche abnahm. Die Leistung der Anlage konnte dadurch nur durch entsprechende Druck und/oder Temperaturerhöhung im Rahmen der möglichen bzw. zulässigen Anlagenparameter aufrechterhalten werden. Nach Ausreizen dieser Parameter ging die Leistung der Anlage stetig zurück, bis die Anlage nicht mehr betrieben werden konnte.

Als weiteres, zu dem obigen analogen Beispiel sei die Biogasaufbereitung erwähnt, in der zunehmend die Membrantechnik als Technologie zur Biogasaufbereitung (nämlich dem Abtrennen von CO₂ aus dem Rohbiogasstrom) Einzug nimmt. Unter Biogasaufbereitung werden Verfahren verstanden, mit denen Biogas derart gereinigt wird, dass es anschließend einer energetischen oder stofflichen Nutzung zugeführt werden kann.

Biogas ist ein brennbares Gas, welches durch Vergärung von Biomasse jeder Art herstellbar ist. Als Ausgangsprodukte für die Vergärung eignen sich in erster Linie biogene Materialien, beispielsweise vergärbare, biomassehaltige Reststoffe, wie Klärschlamm, Bioabfall oder Speisereste, Wirtschaftsdünger (Gülle, Mist), bisher nicht genutzte Pflanzen sowie Pflanzenteile (beispielsweise Zwischenfrüchte, Pflanzenreste und dergleichen) sowie gezielt angebaute Energiepflanzen als nachwachsende Rohstoffe. Biogas entsteht durch den mikrobiellen Abbau der organischen Stoffe unter zumeist anoxischen Bedingungen, wobei Mikroorganismen die Kohlenhydrate, Eiweiße und Fette zu Methan und Kohlendioxid umsetzen.

Biogas enthält neben kurzkettigen Thiolen und Thioether auch, manchmal dominierend, Terpene (Campher, Limonen etc.), Alkane/Alkene, und aliphatische Alkohole/Ketone bzw. allgemein höhere Kohlenwasserstoffe als Hauptverunreinigungen. Diese Verunreinigungen sind zum Teil Vergärungsprodukte, zum anderen Teil können sie auch, wie beispielsweise die biologisch nur schwer abbaubaren Terpene, direkt auf das Substrat zurückgeführt werden. Die oben genannten Verunreinigungen müssen vor einer weiteren Verwendung des Biogases abgetrennt werden. Eine derartige Abtrennung geschieht zurzeit hauptsächlich durch die der Trenneinheit vorgeschalteten Filter, insbesondere Aktivkohlefilter.

Die Abtrennung dieser Verunreinigungen muss jedoch nicht immer vollständig sein, was z.B. durch ungenaue Analyse der Gasinhaltsstoffe des Feedgases und dadurch falsche Auslegung oder Auswahl der Aktivkohle, oder zu langer Betriebsdauer der Aktivkohlefilter geschehen kann, sodass es zu einer Überladung und dadurch zu einem Durchbruch der Verunreinigung kommt, oder auch einfach durch Bedienungsfehler beim Betrieb der Anlage.

Die mangelhaft abgeschiedenen Verunreinigungen des Biogases führen dann bei längerem Betrieb von Gaspermeationsmembraneinheiten zu einer Verblockung der Gaspermeationsmembran. Diese Verunreinigungen sind größtenteils organische Verbindungen mit einem Siedepunkt zwischen etwa 50°C und 150°C. Zur Zeit werden verblockte Membranen durch Einblasen von heißer Luft, Stickstoff oder CO₂ unter Überdruck regeneriert, wobei aufgrund der erhöhten Temperatur die flüchtigen Verunreinigungen oberflächlich abgetragen werden. Ein beträchtlicher Anteil der Verunreinigungen wird jedoch durch die Druckbeaufschlagung und Beibehaltung der Permeationsrichtung des Spülgases mit der Permeationsrichtung des Prozessgases weiter und noch tiefer in die selektive Schicht der Gaspermeationsmembran gedrückt. Dadurch ist es nicht möglich, eine Gaspermeationsmembran vollständig zu reinigen. Durch diesen Spülprozess wird ein Spülgaseingang, ein Spülgasausgang und, da immer Teile des Spülgases auch permeieren, auch ein Permeatausgang benötigt.

Aufgabe der vorliegenden Erfindung ist es nun, die bisherigen Nachteile zu überwinden und ein Verfahren zur Reinigung bzw. Regeneration einer Gaspermeationsmembran vorzusehen. Vorzugsweise kann das Verfahren bei laufender Anlage vorgenommen werden, und es ist der Aus- und Einbau der Gaspermeationsmembraneinheiten nicht mehr nötig.

Diese Aufgabe wird erfindungsgemäß dadurch gelöst, dass in einem Verfahren zur Reinigung einer Gaspermeationsmembran in einer Gaspermeationsmembraneinheit von Verunreinigungen aus höheren Kohlenwasserstoffen, insbesondere aus Alkanen/Alkenen, aliphatischen Alkoholen/Ketonen und kurzkettigen Thiolen und Thioether und Terpenen, wie Campher und Limonen, sowie Öldampf,
- der Abtransport der Verunreinigungen gegen die Betriebsrichtung der Gaspermeationsmembran erfolgt und
- bei einer zu reinigenden Gaspermeationsmembraneinheit permeatseitig ein dafür geeignetes Gas oder Gasgemisch, beispielsweise Stickstoff oder Luft, vorzugsweise Heißluft, eingebracht wird,
- wobei das nach Durchtritt durch die Gaspermeationsmembran mit Verunreinigungen beladene Gas oder Gasgemisch über den Feedgas-Einlass und/oder Retentat-Auslass der Gaspermeationsmembraneinheit abgeführt wird, und
- wobei das Verfahren bei einer Temperatur zwischen 50°C und 150°C, noch bevorzugter zwischen 90°C und 150°C erfolgt,
- die Temperatur des in die Gaspermeationsmembraneinheit eingebrachten Gases oder Gasgemisches, vorzugsweise der Heißluft, bzw. die Temperatur der Gaspermeationsmembraneinheit selbst, im Zuge der Reinigung stufenweise ausgehend von 50°C, vorzugsweise 90°C, erhöht wird und
- die Erwärmung des in die Gaspermeationsmembraneinheit eingebrachten Gases oder Gasgemisches, vorzugsweise der Heißluft, bzw. der Gaspermeationsmembraneinheit selbst auf die nächste Temperaturstufe dann erfolgt, wenn keine Veränderung im Durchfluss und/oder Partialdruck der bei oder bis zur jeweiligen Temperaturstufe siedenden Verunreinigungen mehr feststellbar ist. Der Abtransport der Verunreinigungen gegen die Betriebsrichtung der Gaspermeationsmembran erfolgt. Dadurch wird verhindert, dass noch nicht abtransportierte Verunreinigungen in die selektive Schicht der Gaspermeationsmembran gedrückt werden, im Gegenteil wird durch den Abtransport gegen die Betriebsrichtung sichergestellt, dass die selektive Schicht der Membran zuverlässig von Verunreinigungen befreit wird. Erfindungsgemäß werden dadurch bei Gaspermeationsmembraneinheiten für die Reinigung bzw. Regeneration auch nur mehr zwei der in der Membraneinheit vorgesehenen Aus- bzw. Eingänge benötigt, nämlich ein Spülgaseingang (welcher über den vorgesehenen Permeatausgang erfolgt) und ein durch permeierender Spülgasausgang (welcher über den Feed- oder Produktgasausgang erfolgt).

Alternativ wird bei einer zu reinigenden Gaspermeationsmembraneinheit diese vorab erwärmt, wonach retentatseitig und/oder feedgasseitig Unterdruck angelegt wird und in der Gaspermeationsmembran enthaltene Verunreinigungen von dieser dadurch entfernt und über den Retentat-Auslass und/oder den Feedgas-Einlass abgeführt werden.

Im Falle der Einbringung von Heißluft bedeutet dies, dass Druckluft zuvor erwärmt wird, im Falle der Reinigung mittels Unterdruck muss die Gaspermeationsmembraneinheit selbst erwärmt werden. Dies kann beispielsweise durch Ausbau der Gaspermeationsmembraneinheit und Verbringung in einen Ofen geschehen, alternativ kann die Gaspermeationsmembraneinheit auch zumindest teilweise mit einem geeigneten Wärmetauscher, beispielsweise einem elektrischen Heizmantel ausgestattet sein, über welchen Wärmetauscher die Erwärmung erfolgt. Im letzteren Fall ist es nicht nötig, die Gaspermeationsmembraneinheit für die Reinigung auszubauen, falls die Anlage mehrere Gaspermeationsmembraneinheiten umfasst, kann die Reinigung bei laufendem Betrieb durch geeignete Leitungsführung und Freischalten der zu reinigenden Gaspermeationsmembraneinheit durchgeführt werden.

Im erfindungsgemäßen Verfahren ist vorgesehen, dass die Temperatur des in die Gaspermeationsmembraneinheit eingebrachten, bzw. die Temperatur der Gaspermeationsmembraneinheit selbst, im Zuge der Reinigung stufenweise ausgehend von 50°C, vorzugsweise 90°C, erhöht wird, wobei eine Temperaturstufe vorzugsweise zwischen 10°C und 20°C umfasst.

Gemäß einer bevorzugten Ausführungsform des erfindungsgemäßen Verfahrens wird das Gas oder Gasgemisch, vorzugsweise die Heißluft, mit einem Überdruck von 1,0-2,0 bar, vorzugsweise etwa 1,5 bar (entsprechend einem absoluten Druck von 2,0-3,0 bar, vorzugsweise etwa 2,5 bar) eingebracht.

Vorzugsweise wird das Reinigungsverfahren beendet, wenn nach zwei aufeinanderfolgenden Temperaturstufen keine Veränderung im Durchfluss und/oder Partialdruck der bei oder bis zur jeweiligen Temperaturstufe siedenden Verunreinigungen mehr feststellbar ist.

Die vorliegende Erfindung wird nun anhand der nachfolgenden Ausführungsbeispiele näher erläutert, auf welche sie jedoch nicht beschränkt sein soll.

Bei einer Gaspermeationsmembraneinheit mit Polyimidefasern, einer Anfangsleistung von 4,5 Nm³/h Stickstoff, sowie einem Restsauerstoffgehalt von 1%, einer Recovery von 30% (Recovery = Produkt Nm³/h : durch die dazu benötigte Luftmenge in Nm³/h), 7 bar g Eingangsdruck und 25°C Eingangstemperatur erfolgte eine Reinigung bzw. Regeneration gemäß dem erfindungsgemäßen Verfahren nach einem Leistungsverlust von 52% bezogen auf die Anfangsleistung, sodass die Leistung nur mehr 2,34 Nm³/h Stickstoff sowie einem Restsauerstoffgehalt von 1%, einer Recovery von 30%, 7 bar g Eingangsdruck und 25°C Eingangstemperatur betrug. Dazu wurde bei der Membraneinheit permeatseitig Heißluft mit einer Temperatur von 60°C und einem Überdruck von 1,5 bar (2,5 bar absolut) eingebracht, welche Heißluft nach Durchtritt durch die Gaspermeationsmembran mit Verunreinigungen beladen über den Feedgas-Einlass der Gaspermeationsmembraneinheit abgeführt wurde. Der Durchfluss der Heißluft durch die Membrane zusammen mit den bei der jeweiligen Temperaturstufe siedenden Verunreinigungen wurde nach externer Abkühlung mittels eines Flowmeters gemessen. Die eintretende Heißluft wurde 240 Minuten nach Ausbleiben einer Veränderung in Durchfluss auf die nächste Stufe von 90°C erhitzt, der Druck blieb unverändert. Die Temperatur der Heißluft blieb 240 Minuten bis zum Ausbleiben einer Veränderung in Durchfluss und/oder Partialdruck unverändert, danach wurde die Heißluft auf die nächste Stufe von 100°C erhitzt, der Druck blieb wiederum unverändert. Dieser Vorgang wurde bis zu einer Temperaturerhöhung von 140°C durchgeführt. Nachdem trotz Temperaturerhöhungen keine Veränderung in Durchfluss und/oder Partialdruck erfolgte, wurde die Heißluft nach weiteren 240 Minuten auf die nächste Stufe von 150°C erhitzt, nachdem auch bei dieser Stufe keine Veränderung in Durchfluss und/oder Partialdruck erfolgte, wurde das Reinigungsverfahren beendet. Insgesamt wurde durch das erfindungsgemäße Verfahren die verwendete Gaspermeationsmembraneinheit von 120g Verunreinigungen befreit, und die Anfangsleistung zu 100% erreicht.

Bei einer Gaspermeationsmembraneinheit mit Polyimidefasern, einer Anfangsleistung von 3,8 Nm³/h Stickstoff, sowie einem Restsauerstoffgehalt von 1%, einer Recovery von 28% (Recovery = Produkt Nm³/h : durch die dazu benötigte Luftmenge in Nm³/h), 7 bar g Eingangsdruck und 25°C Eingangstemperatur erfolgte eine Reinigung bzw. Regeneration gemäß der alternativen Ausführungsform des erfindungsgemäßen Verfahrens. Dazu wurde bei der mit Verunreinigungen beladenen Einheit retentatseitig mittels einer Unterdruckpumpe ein Unterdruck von 0,85 bar über eine Kühleinheit angelegt, während die Einheit mittels eines Ofens auf eine Temperatur von 60°C erwärmt wurde. Das somit über den Retentat-Auslass der Gaspermeationsmembraneinheit abgezogene, mit Verunreinigungen beladene Gas wurde hinsichtlich Durchfluss und/oder Partialdruck der bei oder bis zur jeweiligen Temperaturstufe siedenden Verunreinigungen mittels Flowmeter nach der Vacuumpumpe gemessen. Die Temperatur der Einheit wurde nach 240 Minuten wegen Ausbleiben einer Veränderung in Durchfluss und/oder Partialdruck auf die nächste Stufe von 90°C erhöht, der angelegte Unterdruck blieb unverändert. Die Temperatur der Einheit blieb 240 Minuten bis Ausbleiben einer Veränderung in Durchfluss und/oder Partialdruck unverändert, danach wurde sie auf die nächste Stufe von 140°C erhöht, der angelegte Unterdruck blieb wiederum unverändert. Nachdem trotz Temperaturerhöhungen keine Veränderung in Durchfluss und/oder Partialdruck mehr erfolgte, wurde die Temperatur der Einheit nach 240 Minuten auf die nächste Stufe von 150°C erhöht, nachdem auch bei dieser Stufe keine Veränderung in Durchfluss und/oder Partialdruck erfolgte, wurde das Reinigungsverfahren beendet. Insgesamt wurde durch die alternative Ausführungsform des erfindungsgemäßen Verfahrens die verwendete Gaspermeationsmembraneinheit von 80g Verunreinigungen befreit, und die Anfangsleistung von 80% erreicht.

## Patentansprüche

1. Verfahren zur Reinigung einer Gaspermeationsmembran in einer Gaspermeationsmembraneinheit von Verunreinigungen aus höheren Kohlenwasserstoffen, insbesondere aus Alkanen/Alkenen, aliphatischen Alkoholen/Ketonen und kurzkettigen Thiolen und Thioether und Terpenen, wie Campher und Limonen, sowie Öldampf, **dadurch gekennzeichnet, dass**
• der Abtransport der Verunreinigungen gegen die Betriebsrichtung der Gaspermeationsmembran erfolgt und
• bei einer zu reinigenden Gaspermeationsmembraneinheit permeatseitig ein dafür geeignetes Gas oder Gasgemisch, beispielsweise Stickstoff oder Luft, vorzugsweise Heißluft, eingebracht wird,
• das nach Durchtritt durch die Gaspermeationsmembran mit Verunreinigungen beladene Gas oder Gasgemisch über den Feedgas-Einlass und/oder Retentat-Auslass der Gaspermeationsmembraneinheit abgeführt wird,
• das Verfahren bei einer Temperatur zwischen 50°C und 150°C, noch bevorzugter zwischen 90°C und 150°C erfolgt,
• die Temperatur des in die Gaspermeationsmembraneinheit eingebrachten Gases oder Gasgemisches, vorzugsweise der Heißluft, bzw. die Temperatur der Gaspermeationsmembraneinheit selbst, im Zuge der Reinigung stufenweise ausgehend von 50°C, vorzugsweise 90°C, erhöht wird und
• die Erwärmung des in die Gaspermeationsmembraneinheit eingebrachten Gases oder Gasgemisches, vorzugsweise der Heißluft, bzw. der Gaspermeationsmembraneinheit selbst auf die nächste Temperaturstufe dann erfolgt, wenn keine Veränderung im Durchfluss und/oder Partialdruck der bei oder bis zur jeweiligen Temperaturstufe siedenden Verunreinigungen mehr feststellbar ist.

2. Verfahren nach Anspruch 1, **dadurch gekennzeichnet, dass** das Gas oder Gasgemisch mit einem Überdruck von 1,0-2,0 bar, vorzugsweise etwa 1,5 bar, eingebracht wird.

3. Verfahren nach Anspruch 1, **dadurch gekennzeichnet, dass** bei einer zu reinigenden Gaspermeationsmembraneinheit diese vorab erwärmt wird, wonach retentatseitig und/oder feedgasseitig Unterdruck angelegt und in der Gaspermeationsmembran enthaltene Verunreinigungen von dieser entfernt und über den Retentat-Auslass und/oder Feedgas-Einlass abgeführt werden.

4. Verfahren nach einem der Ansprüche 1 bis 3, **dadurch gekennzeichnet, dass** eine Temperaturstufe zwischen 10°C und 20°C umfasst.

5. Verfahren nach einem der Ansprüche 1 bis 4, **dadurch gekennzeichnet, dass** das Reinigungsverfahren beendet wird, wenn nach zwei aufeinanderfolgenden Temperaturstufen keine Veränderung im Durchfluss und/oder Partialdruck der bei oder bis zur jeweiligen Temperaturstufe siedenden Verunreinigungen mehr feststellbar ist.

## Claims

1. Method for cleaning a gas permeation membrane in a gas permeation membrane unit of impurities from higher hydrocarbons, in particular from alkanes/alkenes, aliphatic alcohols/ketones and short-chain thiols and thioethers and terpenes, such as camphor and limonene, and oil vapour, **characterised in that**:
• the impurities are carried away against the operating direction of the gas permeation membrane; and
• a suitable gas or gas mixture, for example nitrogen or air, preferably hot air, is introduced in the permeate side of a gas permeation membrane unit to be cleaned;
• the gas or gas mixture laden with impurities after passing through the gas permeation membrane is discharged via the feed-gas inlet and/or the retentate outlet of the gas permeation membrane unit;
• the method is carried out at a temperature between 50°C and 150°C, even more preferably between 90°C and 150°C;
• the temperature of the gas or gas mixture, preferably the hot air, introduced into the gas permeation membrane unit or the temperature of the gas permeation membrane unit itself is increased gradually in the course of the cleaning, starting from 50°C, preferably 90°C; and
• the gas or gas mixture, preferably the hot air, introduced into the gas permeation membrane unit, or the gas permeation membrane unit itself, is then heated to the next temperature stage when a change in the flow and/or partial pressure of the impurities boiling at or up to the particular temperature stage is no longer detectable.

2. Method according to claim 1, **characterised in that** the gas or gas mixture is introduced at a positive pressure of 1.0-2.0 bar, preferably approximately 1.5 bar.

3. Method according to claim 1, **characterised in that** in a gas permeation membrane unit to be cleaned, said unit is pre-heated, after which negative pressure is applied on the retentate side and/or feed-gas side and impurities contained in the gas permeation membrane are removed therefrom and are discharged via the retentate outlet and/or feed-gas inlet.

4. Method according to any of claims 1 to 3, **characterised in that** a temperature stage is between 10°C and 20°C.

5. Method according to any of claims 1 to 4, **characterised in that** the cleaning method is completed when, after two consecutive temperature stages, a change in flow and/or in partial pressure of the impurities boiling at or up to the particular temperature stage is no longer detectable.

## Revendications

1. Procédé pour le nettoyage d'une membrane de perméation de gaz dans une unité à membrane de perméation de gaz d'impuretés provenant d'hydrocarbures supérieurs, en particulier d'alcanes/alcènes, d'alcools/cétones aliphatiques et de thiols et thioéthers à courte chaîne et de terpènes, comme le camphre et le limonène, ainsi que la vapeur d'huile, **caractérisé en ce que**
• le transport des impuretés a lieu à l'encontre de la direction de fonctionnement de la membrane de perméation de gaz et
• dans le cas d'une unité à membrane de perméation de gaz à nettoyer un gaz ou mélange gazeux approprié à cet effet, par exemple l'azote ou l'air, de préférence l'air chaud, est introduit du côté du perméat,
• le gaz ou mélange gazeux chargé d'impuretés après la traversée de la membrane de perméation de gaz est évacué par le biais de l'entrée de gaz d'alimentation et/ou la sortie de rétentat de l'unité à membrane de perméation de gaz,
• le procédé se déroule à une température entre 50°C et 150°C, de préférence encore entre 90°C et 150°C,
• la température du gaz ou mélange gazeux introduit dans l'unité à membrane de perméation de gaz, de préférence de l'air chaud, ou la température de l'unité à membrane de perméation de gaz elle-même, est augmentée par paliers au cours du nettoyage à partir de 50°C, de préférence de 90°C, et
• le chauffage du gaz ou mélange gazeux introduit dans l'unité à membrane de perméation de gaz, de préférence de l'air chaud, ou de l'unité à membrane de perméation de gaz elle-même au palier de température suivant a lieu quand aucune modification dans l'écoulement et/ou la pression partielle des impuretés bouillant au palier de température correspondant ou jusqu'à celui-ci ne peut plus être mise en évidence.

2. Procédé selon la revendication 1, **caractérisé en ce que** le gaz ou mélange gazeux est introduit avec une surpression de 1,0-2,0 bar, de préférence d'environ 1,5 bar.

3. Procédé selon la revendication 1, **caractérisé en ce que** dans le cas d'une unité à membrane de perméation de gaz à nettoyer, celle-ci est préalablement chauffée, après quoi une dépression est appliquée du côté du rétentat et/ou du côté du gaz d'alimentation et les impuretés contenues dans la membrane de perméation de gaz sont retirées de celle-ci et évacuées par le biais de la sortie de rétentat et/ou de l'entrée de gaz d'alimentation.

4. Procédé selon l'une des revendications 1 à 3, **caractérisé en ce qu'**un palier de température comprend entre 10°C et 20°C.

5. Procédé selon l'une des revendications 1 à 4, **caractérisé en ce que** le procédé de nettoyage est terminé quand aucune modification dans l'écoulement et/ou la pression partielle des impuretés bouillant au palier de température correspondant ou jusqu'à celui-ci ne peut plus être mise en évidence après deux paliers de température successifs.
